# EUROPEAN PATENT SPECIFICATION

(11) **EP 1 285 870 B1**
(45) Date of publication and mention of the grant of the patent: **29.09.2004**
(21) Application number: 02078006.0
(22) Date of filing: 23.07.2002
(51) Int. Cl.: B65G 47/90

(54) **Gripper device**
Greifvorrichtung
Dispositif de préhension

(30) Priority: 23.07.2001 EP 01202786
(43) Date of publication of application: 26.02.2003
(73) Proprietor: FPS Food Processing Systems B.V., 2631 RE Nootdorp (NL)
(72) Inventor: van Heerd, Gerrit, 6741 LL Lunteren (NL)
(74) Representative: Prins, Adrianus Willem, Mr. Ir.

(56) References cited:
- EP-A- 0 366 943
- EP-A- 0 721 889
- DE-B- 1 201 523
- NL-A- 9 101 951
- US-A- 2 488 826
- US-A- 5 116 094

## Description

The invention relates to a gripper device according to the preamble of claim 1.

Further, the present invention relates to a method for displacing at least one closed unit of consumer packages, such as egg containers, which units function as package for individual products and are provided with a cover, as further described in the preamble of claim 8.

Such a device and method are known from applicant's US-A-5,463,847. In the device according to this document, egg containers are picked up by rotating circular gripper blades on two opposite sides around such containers, so that the containers are embraced, and the egg containers are set down by rotating the gripper blades away from the containers, thus releasing them.

It is commonly known that such egg containers are mostly made of cardboard, possess covers or cover portions hinged to the bottom portion on one of the longitudinal sides and, when being closed, are pressed upon, whereby clamping of the cover onto the bottom portion is obtained in that, for instance, an opening in the edge of the cover snaps over a projecting part of the bottom portion.

Due to the highly flexible resilience of the cardboard, or other packaging material used, products such as eggs are thus eminently protected from damages, but displacement, in particular release of the units, will involve the risk of the cover snapping out of the bottom portion and hinging away from the bottom portion.

To obviate this problem, the gripper device according to the invention is characterized according to claim 1, with further elaborations according to claims 2 to 7.

Further, the method is characterized by the steps according to claims 8 and 9.

In the manner thus indicated, the units, in particular egg containers, remain suitably closed during transfer, in particular during release, and the products in these units cannot then, and more specifically thereafter, fall out.

In the further elaboration, by the use of the flaps, the pattern in which the units are picked up will be preserved, so that outer packages can be filled very accurately and advantageously.

Further particularities will be elucidated with reference to the accompanying drawing, wherein:
Fig. 1 shows a schematic elevational view of the gripper device according to the invention, with the units not engaged yet,
Fig. 2 shows the same view as Fig. 1, now with the units engaged by the gripper device, and
Fig. 3 shows a schematic view of the same device, along arrow A in Fig. 1.

In the different figures, the same parts are designated by the same reference numerals.

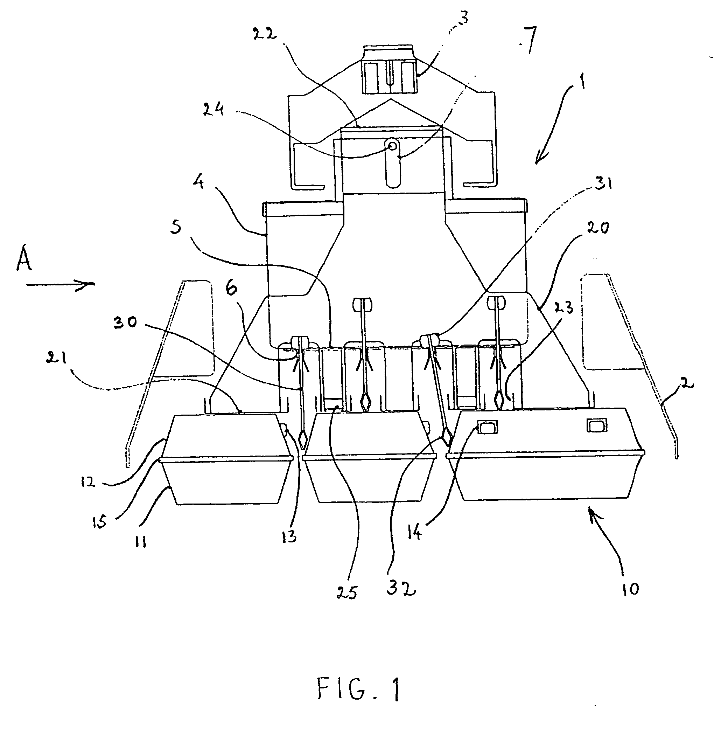

In Fig. 1, a gripper device 1 comprises a clamping member 20 and holding members 30. Such a device will generally be mounted on a mast which can automatically or manually move the gripper device to and from the correct outer package. Gripper device 1 further comprises a housing 4. With gripper members 2, schematically represented, for instance gripper blades, claws, or forks, which form part of this gripper device 1 and whose drive, along with the connection thereto, is included in housing 4, units 10, for instance egg containers, can be engaged by embracing or clamping them with the gripper members when moved to the correct position, for instance through a rotation combined with a translation, to thereby obtain sufficient engagement or clamping. The units are generally rectangular, so that engaging and embracing them will occur on opposite longitudinal sides. In the situation represented, the units 10 have not been engaged yet.

As is commonly known, these egg containers are mostly made of flexible material, such as cardboard, with a bottom 11 and a cover 12 manufactured from the same piece of material and capable of hinging along a crease line thereof. Conventionally, the bottom 11 comprises one or more protuberances 13 and the cover correspondingly comprises one or more snap holes 14, so that the cover 12, when pushed over the bottom part, is thereby snapped and the egg container is closed. To prevent the cover getting detached during displacement, in particular during release, the gripper device according to the present invention comprises a clamping member 20, in particular a plate member 21, which covers at least partly the one or more covers 12 of the one or more units 10 to be displaced, and hence keeps the one or more covers 12 closed.

Such a clamping member 20 is movable by way of a pin 24 in a slot 7 in the housing 4 of the gripper device 1 and can thus move freely in substantially vertical direction. The clamping member when moving freely above a work location hangs in a lower position in the gripper device, and, when the gripper device is positioned above a unit or combination of units, will be placed on the cover, while the gripper device can be moved further down to bring the gripper members 2 in the correct position. Next, these gripper members 2 will be moved around the units to engage them, while the clamping member in this position, or in a slightly raised position, is secured via a locking plate 22 with a locking member 3, for instance an electromagnet. This figure shows the situation where the plate member has been placed on the covers but the units 10 have not yet been embraced and engaged.

Further, in the housing 4, holding members 30 are included, which, when the gripper device 1 is being moved down, will, if possible, move down between the units 10. These holding members 30 in the present exemplary embodiment are designed as plates or flaps, with thickened portions 31 and 32 at the upper edge and lower edge, and can move freely in substantially vertical direction between this upper and lower edge, being guided through hinge slots 6 in a bottom plate 6 of the housing 4. To enable the movement of the holding members 30 in downward direction, placement slots 23 are provided in the plate member 21, in line with the hinge slots 6. By positioning these holding members between the units, the units, such as the egg containers drawn here, when being slightly pressed towards each other during pickup, will suitably retain their relative position and not be pressed onto or against each other. It will be clear to anyone skilled in the art that the thickened portions can extend over the entire length, but may also be limited to a few positions along those edges, for instance projecting bolts used for limitation and for suspension.

As mentioned above, the units to be displaced are generally rectangular, and thus contain, for instance, 2 by 3 products, or 2 by 5 products, or still other combinations. Fig. 1 involves a unit of 2x3 products, which means that in this view the two left-hand units present a view of a width of two products, whilst the right-hand unit presents a view of a length of three products. In forming patterns of such units 10, generally, an interspace is left between the units. This interspace is determined not only by the number of units, but also by the manner in which, for instance, egg containers of cardboard have been formed from the same piece of material and thus may still be partly attached to each other along seams. In the present figure, the 2x3 units possess seams only along the short sides. As represented in the figure, the pattern formed leaves interspaces between each unit in a direction transverse to the direction of the view, that is, two interspaces in the case of these three units. To maintain such patterns as well as possible, it will generally be required to place a holding member in each interspace, which means that (n+1) loose units will accordingly form n interspaces, and hence n holding members 30 can be suitably used. To make the device suitable for other patterns or units with different geometries, several slots with holding plates have been provided. In the figure, it can be properly seen how the holding plates which will not be used in this pattern rest by their lower edges on the covers of the units.

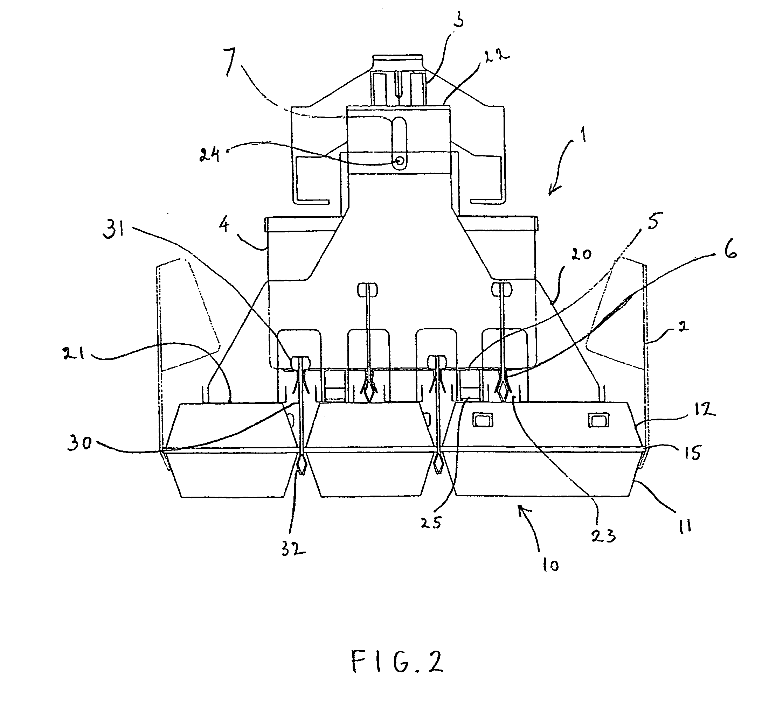

Fig. 2 represents how the units 10, right before being picked up or set down, have been engaged and embraced with the gripper members 2. The holding members 30 used are situated between the units, having thickened portions at lower edge 32 disposed under the covers with their edges 15. The units have been moved against each other, while in the present exemplary embodiment the gripper members have been rotated as well as translated to be able to assume this position.

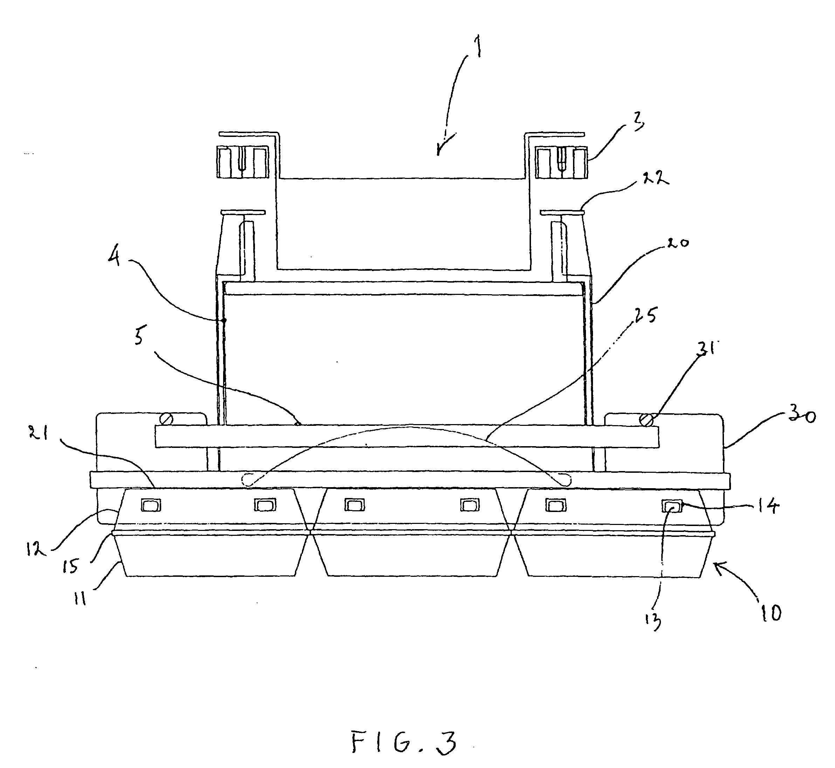

The view according to Fig. 3 shows the gripper device in the longitudinal direction, in the direction of arrow A in Fig. 1. Of the left-hand 2x3 units placed behind each other in Figs. 1 and 2, Fig. 3 shows the long longitudinal sides, which will be engaged and embraced by one or more gripper members 2 on that left side. Fig. 3 does not show the gripper members on this side.

As mentioned above, the plate member 21 is situated on the covers 12 of the units 10 while these are not yet embraced and engaged by the gripper members 2. This means that the holding plates 30 can come down still further, while the bottom plate 5 of the housing 4 in turn will be moved still further towards the covers 12 of the units 10. The vertical distance between the plate member 21 and the bottom plate 5 will thereby decrease correspondingly. To fix the plate member as much as possible in the position where the gripper members 2 press the units 10 slightly towards each other, a leaf spring 25, or a number of leaf springs, has been placed between the bottom plate 5 and the plate member 21. The placement slots 23 are provided with upstanding edges 26, so that the leaf springs cannot slip away sideways. In order to offer the units some space to move during pickup after engagement with the gripper members, it is possible, with the locking member 3, for instance an electromagnet to be excited, to hold and retain the plate member 21 at a distance of a few mm above the covers, until the time of release.

The present invention also provides a method for displacing at least one closed unit of consumer packages, such as egg containers, which units function as package for individual products and are provided with a cover, comprising the successive steps of
- positioning a gripper device at least closely above the unit,
- engaging the unit along two opposite longitudinal sides thereof,
- followed by controlled pickup, transfer and positioning of the closed units in outer packages,
- releasing the units, and
- removing the gripper device,
wherein at least during release of the at least one unit the cover is kept closed with a clamping member.

In particular, the method is characterized in that during displacement of at least (n+1) units these are held in position relative to each other with n holding members, with n ≥ 1, while the clamping member keeps the cover closed when the holding members are placed between the units, during transfer of the units, and when removing the holding members held clamped between the units.

For the practice of this method, advantageously, the gripper device according to the above-described exemplary embodiment is used. It will be clear to anyone skilled in the art, however, that there are other ways of fixing units and patterns, for instance pneumatically, which are understood to fall within the present inventive concept.

## Claims

1. A gripper device for displacing at least one unit of consumer packages, such as egg containers, which units function as package for individual products and are provided with a cover (12), comprising gripper members (2) for engaging the unit on two opposite longitudinal sides thereof, in order for said units, after being closed, to be picked up, transferred and subsequently placed in outer packages in a controlled manner,
**characterized in that**
the gripper device further comprises a clamping member (20) for keeping the cover (12) closed at least during release of said closed units.

2. A device according to claim 1, **characterized in that** the clamping member (20) comprises at least one substantially horizontal plate member (21).

3. A device according to claim 2, **characterized in that** the gripper device further comprises n holding members (30), with n ≥ 1, which members are placed between the at least (n+1) units in order to keep these units in their relative position during pickup, transfer and placement, in cooperation with the gripper members (2).

4. A device according to claim 2 or 3, **characterized in that** the holding members (30) comprise at least one flap which, during transfer, hanging substantially vertically, is clamped between at least two units.

5. A device according to claim 4, **characterized in that** the flap, with a thickened portion (32, 31) at its lower edge and upper edge, can, during pickup and displacement, move freely in substantially vertical direction through a slot (6) provided in the plate member (21).

6. A device according to any one of the preceding claims, **characterized in that** further a locking member (3) is included for locking the position of the plate member, after engagement, during transfer, and before release of said unit.

7. A device according to claim 6, **characterized in that** the locking member (3) consists of an electromagnet.

8. A method for displacing at least one closed unit of consumer packages, such as egg containers, which units function as package for individual products and are provided with a cover (12), comprising the successive steps of
- positioning a gripper device at least closely above said unit,
- engaging the unit along two opposite longitudinal sides thereof,
- followed by controlled pickup, transfer and placement of said closed units in outer packages,
- releasing the units, and
- removing the gripper device,
**characterized in that** at least during the release of the at least one unit the cover is kept closed with a clamping member (20).

9. A method according to claim 8, **characterized in that** during the displacement of at least (n+1) units these are held in position relative to each other with n holding members (30), with n ≥ 1, while the clamping member (20) keeps the cover closed when the holding members are placed between the units, during the transfer of the units, and when removing the holding members held clamped between the units.

## Patentansprüche

1. Greifvorrichtung zum Versetzen mindestens einer Einhelt von Verbraucherverpackungen, wie Eierbehälter, welche Einheiten als Verpackungen für einzelne Waren dienen und mit einer Abdeckung (12) ausgestattet sind, aufweisend Greifglieder (2) zum Greifen der Einheit an zwei ihrer gegenüberliegenden Längsseiten, um die Einheiten, nach einem Verschließen, aufzunehmen, zu versetzen und anschließend in einer kontrollierten Weise in äußere Verpackungen zu plazieren,
**dadurch gekennzeichnet, daß**
die Greifvorrichtung weiterhin ein Klemmglied (20) aufweist zum Geschlossenhalten der Abdeckung (12) zumindest während des Freigebens der geschlossenen Einheiten.

2. Vorrichtung nach Anspruch 1, **dadurch gekennzeichnet daß** das Klemmglied (20) zumindest ein im wesentlichen horizontales Plattenglied (21) aufweist.

3. Vorrichtung nach Anspruch 2, **dadurch gekennzeichnet daß** die Greifvorrichtung weiterhin n Halteglieder (30), mit n ≥ 1, aufweist, deren Glieder zwischen den zumindest (n+1) Einheiten plaziert sind, um diese Einheiten in ihrer relativen Position während des Aufnehmens, Versetzens und Platzierens im Zusammenwirken mit den Greifgliedern (2) zu halten.

4. Vorrichtung nach Anspruch 2 oder 3, **dadurch gekennzeichnet, daß** die Halteglieder (30) zumindest eine Klappe aufweist, welche, während des Versetzens, im wesentlichen vertikal hängend, zwischen zumindest zwei Einheiten geklemmt wird.

5. Vorrichtung nach Anspruch 4, **dadurch gekennzeichnet, daß** sich die Klappe, mit einem dickeren Bereich (32, 31) an ihrer unteren Kante und oberen Kante, während des Aufnehmens und Verschiebens, frei in einer im wesentlichen vertikalen Richtung durch eine in dem Plattenglied (21) bereitgestellte Nut bewegen kann.

6. Vorrichtung nach einem der vorangegangenen Ansprüche, **dadurch gekennzeichnet, daß** weiterhin ein Sicherungs- oder Verriegelungsglied (3) zum Sichern oder Verriegeln der Position des Plattenglieds nach dem Greifen, während des Versetzens und vor dem Freigeben der Einheit beinhaltet ist.

7. Vorrichtung nach Anspruch 6, **dadurch gekennzeichnet, daß** das Sicherungsoder Verriegelungsglied (3) aus einem Elektromagneten besteht.

8. Verfahren zum Verschieben mindestens einer geschlossenen Einheit von Verbraucherverpackungen, wie Eierbehälter, deren Einheiten als Verpackungen für einzelne Waren dienen und mit einer Abdeckung (12) ausgestattet sind, mit den nacheinander folgenden Schritten
- Positionieren einer Greifvorrichtung zumindest nahe oberhalb der Einheit,
- Greifen der Einheit entlang ihrer zwei gegenüberliegenden länglichen Seiten,
- gefolgt von kontrolliertem Aufnehmen, Versetzen und Platzieren der geschlossenen Einheiten in äußere Verpackungen,
- Freisetzen der Einheiten, und
- Entfernen der Greifvorrichtung,
**dadurch gekennzeichnet, daß** zumindest während des Freisetzens der mindestens einen Einheit die Abdeckung mit einem Klemmglied (20) geschlossen gehalten wird.

9. Verfahren nach Anspruch 8, **dadurch gekennzeichnet, daß** während des Versetzens der zumindest (n+1) Einheiten diese in einer relativen Position zueinander mit n Haltegliedern, mit n>=1, gehalten werden, während die Klemmglieder (20) die Bedeckungen geschlossen halten, wenn während des Versetzens der Einheiten die Halteglieder zwischen den Einheiten plaziert werden, und beim Entfernen der Halteglieder zwischen den Einheiten eingeklemmt bleiben.

## Revendications

1. Dispositif de préhension pour déplacer au moins une unité parmi des conditionnements de biens de consommation, tels que des conteneurs ou des boîtes à oeufs, lesquelles unités font fonction de conditionnements pour des produits individuels et sont munies d'un couvercle (12), comprenant des éléments de préhension (2) pour engager l'unité sur ses deux côtés longitudinaux opposés, afin pour lesdites unités, après avoir été fermées, d'être prélevées, transférées et placées subséquemment dans des conditionnements externes d'une manière contrôlée,
**caractérisé en ce que** le dispositif de préhension comprend en outre un élément de blocage (20) pour maintenir le couvercle (12) fermé au moins durant la libération desdites unités fermées.

2. Dispositif selon la revendication 1,
**caractérisé en ce que** l'élément de blocage (20) comprend au moins un élément (21) de plaque sensiblement horizontale.

3. Dispositif selon la revendication 2,
**caractérisé en ce que** le dispositif de préhension comprend en outre n éléments de maintien (30), avec n ≥ 1, lesdits éléments étant placés entre les au moins (n + 1 ) unités de facon à maintenir ces unités dans leur position relative durant le prélèvement, le transfert et le placement, en coopération avec les éléments de préhension (2).

4. Dispositif selon la revendication 2 ou 3,
**caractérisé en ce que** les éléments de maintien (30) comprennent au moins un volet qui, durant le transfert et la suspension sensiblement verticale, sont serrés entre au moins deux unités.

5. Dispositif selon la revendication 4,
**caractérisé en ce que** le volet, ayant une portion épaissie (32, 31) à son bord inférieur et son bord supérieur, peut, durant le prélèvement et le déplacement, se déplacer librement dans une direction sensiblement verticale à travers une fente (6) prévue dans l'élément de plaque (21).

6. Dispositif selon l'une quelconque des revendications précédentes,
**caractérisé en ce que** en outre un élément de verrouillage (3) est inclus pour verrouiller la position de l'élément de plaque, après l'engagement, durant le transfert, et avant la libération de ladite unité.

7. Dispositif selon la revendication 6,
**caractérisé en ce que** l'élément de verrouillage (3) est constitué par un électroaimant.

8. Procédé pour déplacer au moins une unité fermée parmi des conditionnements de biens de consommation, tels que des conteneurs ou des boîtes à oeufs, lesquelles unités font fonction de conditionnement pour des produits individuels et sont munies d'un couvercle (12), comprenant les étapes successives consistant à :
- positionner un dispositif de préhension au moins à proximité au-dessus de ladite unité,
- engager l'unité le long de deux côtés longitudinaux opposés de celle-ci,
- suivies par des étapes contrôlées de prélèvement, de transfert et de placement desdites unités fermées dans des conditionnements externes,
- libération des unités, et
- retrait du dispositif de préhension,
**caractérisé en ce qu'**au moins durant la libération de ladite au moins une unité le couvercle est maintenu fermé avec un élément de blocage (20).

9. Procédé selon la revendication 8,
**caractérisé en ce que** durant le déplacement d'au moins (n + 1) unités celles-ci sont maintenues en position par rapport à chacune des autres avec n éléments de maintien (30), dans lequel n ≥ 1, tandis que les éléments de blocage (20) maintiennent le couvercle fermé lorsque les éléments de maintien sont placés entre les unités, durant le transfert des unités, et lors du retrait des éléments de maintien maintenus serrés entre les unités.
